# EUROPÄISCHE PATENTSCHRIFT

(11) **EP 1 335 823 B1**
(45) Veröffentlichungstag und Bekanntmachung des Hinweises auf die Patenterteilung: **02.02.2005**
(21) Anmeldenummer: 01997178.7
(22) Anmeldetag: 23.10.2001
(51) Int. Cl.: B29C 47/08, B29C 47/12, B29C 47/02, B29C 33/36

(54) **VERFAHREN ZUM HERSTELLEN VON PROFILEN**
METHOD FOR PRODUCING PROFILES
PROCEDE DE PRODUCTION DE PROFILES

(30) Priorität: 24.11.2000 DE 10058889
(43) Veröffentlichungstag der Anmeldung: 20.08.2003
(73) Patentinhaber: Gottlieb Binder GmbH & Co. KG, 71088 Holzgerlingen (DE)
(72) Erfinder: SCHULTE, Axel, 71088 Holzgerlingen (DE)
(74) Vertreter: Bartels, Martin Erich Arthur
(86) Internationale Anmeldenummer: PCT/EP2001/012198
(87) Internationale Veröffentlichungsnummer: WO 2002/042051

(56) Entgegenhaltungen:
- WO-A-99/17916
- DE-A- 19 700 028
- DE-C- 19 952 416
- US-A- 4 290 248
- US-A- 4 504 206

## Beschreibung

Die Erfindung betrifft ein Verfahren zum fortlaufenden Herstellen von Vollkammerprofilen.

Bei einem bekannten Verfahren nach der EP 0 563 575 B1 dient dieses zur fortlaufenden Herstellung eines aus einem glatten Innenrohr und einem mit diesem verschweißt mit Querrillen versehenen Außenrohr bestehenden Verbundrohres mit einer Rohrmuffe. Das bekannte Verfahren zeichnet sich dabei durch die folgenden Verfahrensschritte aus. Es wird zunächst ein Außenschlauch extrudiert, wobei der Außenschlauch durch ein von außen aufgebrachtes Teilvakuum mit einer Wellung mit Querwellen versehen wird. Die dahingehende Wellung mit Querrillen wird über backenartige Formgebungsteile erhalten, die hintereinander längs von zwei Formgebungssträngen fortlaufend die Formgebung vornehmen. Dann wird ein Innenschlauch in den Außenschlauch extrudiert und der Innenschlauch wird gegen die Wellentäler des Außenschlauches gedrückt und dort mit dem Außenschtauch entsprechend verschweißt. Der Außenschlauch selbst wird dann in vorgegebenen Abständen unter Aufbringung des Teilvakuums von außen zu einer im wesentlichen glattwandigen, etwa zylindrischen Rohrmuffe aufgeweitet. Vorrichtungen zur fortlaufenden Herstellung dahingehender gewellter Verbundrohre sind in einer Vielzahl von Ausführungsformen bekannt und die dahingehende Formgebungstechnologie wird in der Fachwelt mit "Corrugatortechnik" bezeichnet.

Durch die DE 198 08 995 C1 ist ein Befestigungssystem für einen Fahrzeugsitz bekannt mit mindestens einem Polsterteil aus einem geschäumten Material, das von mindestens einem Polsterbezugteil umgeben ist, das mit mindestens einem als Verhakungsmittel dienenden massiven Vollkammerprofil verbunden ist, das außenumfangsseitig in der Art von Längsrippen ausgebildete Verhakungselemente aufweist. Im Polsterteil ist ein der Form der jeweiligen Profilleiste angepaßter Längskanal vorhanden, der in seiner Längsrichtung Ausnehmungen aufweist, die dem Eingriff der Verhakungselemente dienen. Mit dem dahingehend bekannten Befestigungssystem kommt es zu einer definierten Fixierung des Polsterbezugteils auf dem Polsterteil über die Verhakungselemente des Profils, die in unmittelbarem Eingriff mit den Ausnehmungen stehen. Bei der dahingehend bekannten Lösung können zwischen dem feinporigen Schaummaterial und dem Profil Adhäsionskräfte entstehen, die den sicheren Verbund verstärken.

Das bekannte massiv ausgebildete Vollkammerprofil, das man in der Fachsprache auch mit "Kederprofil" bezeichnet, ist vorzugsweise ein Monoextrudat und besteht aus weichem Kunststoffmaterial, beispielsweise aus Elastinmaterial. Besonders bevorzugt kommen hierbei Olefine und PVC zum Einsatz. Des weiteren können die eingesetzten Materialien entsorg- und recycelbar sein. Bei der Herstellung des Kederprofils als Monoextrudat über eine übliche Extrusionsvorrichtung ist zwar ein sicherer Herstellprozeß gewährleistet; die Ausstoßraten und mithin die Herstellgeschwindigkeiten für das Profil sind jedoch sehr gering bemessen, so daß das bekannte Herstellverfahren für das Profil teuer ist.

Durch die WO 99/17916 ist ein gattungsgemäßes Verfahren zum Herstellen von Vollkammerprofilen bekannt mit zwei Formgebungssträngen, die aus einzelnen bewegbaren Formen bestehen. Diese bilden in Hintereinanderfolge einen Formtunnel, in den der Kunststoff an einem Ende eingebracht wird und nach Erstarren am anderen Ende nach dem Trennen der Formen kontinuierlich entnommen werden kann. Mittels dahingehender "wandernder Formen" lassen sich unter anderem Kederprofile nach der DE 198 08 995 C1 erhalten.
Dieses bekannte, bereits eingangs vorgestellte Kederprofil weist auf seiner der Profilierung abgewandten Rückseite einen schlitzartigen Kanal auf, der dem Eingriff eines Ansatzteils, beispielsweise in Form einer sogenannten Nähfahne dient, die nach Erstellen des Profils in dem schlitzförmigen Kanal befestigt, insbesondere eingeklebt wird, um dergestalt später die Verbindung von einem Polsterbezugteil mit Formschaumteilen zur Komplementierung eines Fahrzeugsitzes herzustellen, wobei die Nähfahne die dahingehende Verbindung herstellt, indem sie mit ihrem anderen freien Endrand mit dem Polsterteil (Stoff, Leder etc.) entsprechend vernäht, verschweißt oder verklebt ist. Das Erstellen der dahingehenden Verbindung in mehreren Herstellschritten ist zeitaufwendig und mithin kostenintensiv und es hat sich in der Praxis gezeigt, dass insbesondere im Dauerbetrieb die Verbindung von Kederprofil mit Nähfahne sich auch ungewollt lösen kann, was zum Versagen des Befestigungssystems führt.

Ausgehend von diesem Stand der Technik liegt der Erfindung die Aufgabe zugrunde, ein Verfahren zum fortlaufenden Herstellen von massiven Profilen zu schaffen, mit dem sich hohe Herstellgeschwindigkeiten erreichen lassen, welches es erlaubt, Vollkammerprofile in nahezu beliebigen Geometrien in kostengünstiger Weise zu erzeugen, und dass insbesondere für das Erstellen von Befestigungssystemen - Polsterbezugteil mit Formschaum - bei Kraftfahrzeugsitzen ein kostengünstiges Gesamtsystem erreicht ist, ohne dass Qualitätsmängel od. dgl. zu befürchten sind. Eine dahingehende Aufgabe löst ein Verfahren mit den Merkmalen des Patentanspruches 1 in seiner Gesamtheit.

Gemäß dem kennzeichnenden Teil des Patentanspruches 1 wird zwischen den Formgebungsbacken der Formgebungsteile, die unter Bildung der Formgebungsstrecke aneinandergehalten werden, ein Einlaufspalt begrenzt, über den ein zugeführtes Ansatzteil mit dem Profil verbunden wird.

Bei dem Verfahren zum fortlaufenden Herstellen von Vollkammerprofilen werden mindestens zwei Formgebungsstränge vorgesehen, die jeweils aus einzelnen Formgebungsteilen bestehen, die gruppenweise einander zugeordnet und über eine vorgebbare Formgebungsstrecke sowie mit einem Formmaterial versehen derart aneinandergehalten werden, daß nach Trennen der Gruppen an Formgebungsteilen das Volikammerprofil erhalten wird. Das zugeführte Ansatzteil, das mit dem Profil während seines Formgebungsvorganges unmittelbar verbunden wird, bildet eine Art Nähfahne aus, mit der das Profil später mit dem Bezugsteil für einen Kraftfahrzeugsitz od. dgl. mittels Klebstoff oder einer Verbindungsnaht verbunden werden kann (vgl. beispielsweise DE 199 52 416 C1). Vorzugsweise besteht das Ansatzteil aus einem möglichst reißfesten Kunststoff oder Textilgewebe. Das Ansatzteil kann mittig in das Profil eingreifen oder mit einem Teil seines Außenumfanges formend verbunden werden.
Mit dem erfindungsgemäßen Verfahren lassen sich sehr hohe Herstellgeschwindigkeiten für das Profilmaterial einschließlich Ansatzteil erreichen, so dass sich insbesondere für das Erstellen von Befestigungssystemen bei Kraftfahrzeugsitzen derart ein kostengünstiges Gesamtsystem erhalten läßt, ohne dass Qualitätsmängel od. dgl. zu befürchten wären.

Bei einer weiteren bevorzugten Ausführungsform des erfindungsgemäßen Verfahrens wird jede Profilausnehmung umfangsseitig mit mindestens einem rippenartigen Längskanal versehen, der mit der Profilausnehmung einen Hohlkanal bildet. Über die dahingehenden rippenartigen Längskanäle werden später mit Erstellen des Profils an diesem rippenartige Verhakungselemente auf seiner Außenseite angeformt, was später bei Anbringen des Befestigungssystems in das Schaummaterial einen verbesserten Eingriff des Profils ermöglicht.

Vorzugsweise wird das Formmaterial aus einem thermoplastischen Kunststoffmaterial gebildet und über eine Extruder- und Zuführeinrichtung am Anfang der Formgebungsstrecke zwischen die benachbarten Formgebungsstränge mit ihren Formgebungsteilen eingebracht. Da die jeweiligen Formgebungsstränge fortlaufend und kontinuierlich die Herstellung des Profils ermöglichen, ist es vorteilhaft, wenn das Ausgangsmaterial vorzugsweise in Form eines thermoplastischen Kunststoffmaterials über die Extruder- und Zuführeinrichtung fortlaufend angeliefert werden kann.

Vorzugsweise werden des weiteren die Formgebungsteile eines jeden Formgebungsstranges in einer geschlossenen Umlaufbahn geführt und von einem Zentralantrieb derart angetrieben, daß die Formgebungsteile lose aneinanderstoßend die aufgebrachte Antriebsleistung an das in Umlaufrichtung jeweils nachgeordnete Formgebungsteil weitergeben. Auf diese Art und Weise ist mit geringen Antriebskräften und mithin mit geringen Antriebsenergien ein sicherer Antrieb der Formgebungsstränge gewährleistet. Da die Formgebungsteile nur lose aneinanderstoßen, können verschlissene Formgebungsteile ohne weiteres und sehr rasch getauscht werden. Ferner besteht die Möglichkeit, Formgebungsteile verschiedenster Art, also mit unterschiedlichst gestalteten Kavitäten, in einer beliebig vorgebbaren Reihenfolge anzuordnen, um derart Profile zu erhalten, die auch in sich mit verschiedensten Querschnitten versehen sind. Vorzugsweise wird die Eindringrichtung des Kunststoffmaterials zwischen die Formgebungsstränge parallel zu deren Umlaufrichtung gewählt; es besteht aber auch die Möglichkeit, das Kunststoffmaterial quer zu dieser Umlaufrichtung zwischen die freien Spalte der Gruppen an zuordenbaren Formgebungsteilen einzubringen. Die vorstehend beschriebenen Merkmalsausgestaltungen erlauben aber.jedenfalls einen sehr schnell ablaufenden Herstellbetrieb für das zu erstellende Profil.

Bei einer weiteren bevorzugten Ausführungsform des erfindungsgemäßen Verfahrens werden die Formgebungsteile mit ihren Kavitäten zum Erzeugen des Profils an eine Druckmedium erzeugende und/oder eine Vakuum erzeugende Einrichtung angeschlossen, wobei zusätzlich oder alternativ für die Formgebungsteile eine Beheizungs- und/oder Kühleinrichtung vorgesehen wird. Kommt eine Vakuum erzeugende Einrichtung zum Einsatz, verbessert dies das Einfließverhalten des Kunststoffmaterials in die Kavitäten der Formgebungsteile. Wird ein Druckmedium in die Kavitäten eingebracht, verbessert dies gegebenenfalls die Ausformung für das Profil mit seinen Verhakungselementen aus den Formgebungsteilen. Über eine Beheizungsoder Kühleinrichtung läßt sich der Formgebungsvorgang weiter ansteuern, wobei beim Beheizen das Kunststoffmaterial länger plastifizierbar gehalten werden kann und durch das Kühlen läßt sich die Abkühlstrecke verkürzen und das fertige Profil kann rasch aus der Vorrichtung mit den Formgebungssträngen entformt werden.

Sofern die Formgebungsteile modular aufgebaut werden, wird durch den Wechsel von Formgebungseinsätzen die Art der profilerzeugenden Profilausnehmungen bzw. Kavitäten verändert, so daß dem Grunde nach mit nur einer Corrugatorvorrichtung sich eine Vielzahl an verschiedensten Profilen mit unterschiedlichsten Geometrien in kürzester Zeit herstellen läßt.

Im folgenden wird das erfindungsgemäße Verfahren anhand der Zeichnung näher erläutert.

Es zeigen in prinzipieller und nicht maßstäblicher Darstellung die
- Fig. 1: eine perspektivische Ansicht auf die Herstellvorrichtung;
- Fig. 2: in perspektivischer Ansicht zwei zu einer Gruppe zusammengefaßte Formgebungsteile der beiden Formgebungsstränge nach der Fig.1;
- Fig. 3: einen Schnitt durch die Formgebungs-Teilanordnung nach der Fig. 2, sofern die Formgebungsteile unter Bildung einer Gesamtform aneinanderliegen;
- Fig. 4: ein Profil, das sich mit der Vorrichtung gemäß den Fig.1 bis 3 entsprechend herstellen läßt.

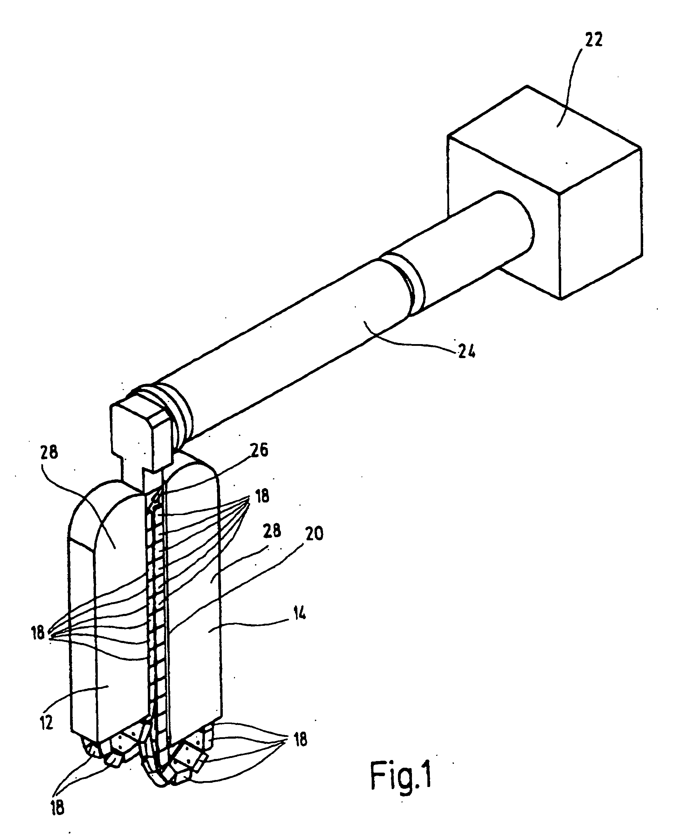

Die Vorrichtung nach der Fig.1 dient zum Durchführen eines Verfahrens zum fortlaufenden Herstellen von Profilen 10, insbesondere in Form von Vollkammerprofilen, wie sie ausschnittsweise in der Fig.4 dargestellt sind. Die Vorrichtung weist zwei Formgebungsstränge 12,14 auf, wobei in Blickrichtung auf die Fig.1 gesehen der rechte Formgebungsstrang 14 länger ausgeführt ist als der linke Formgebungsstrang 12. Durch die dahingehende Anordnung ist es möglich, unterhalb des Formgebungsstranges 12 eine nicht näher dargestellte Abgriffseinrichtung vorzusehen, die in der Lage ist, in der Art einer Zwangsführung das Profil 10 aus dem rechten Formgebungsstrang 14 zu entfernen. Bei einer nicht näher dargestellten Ausführungsform der Vorrichtung ist es aber auch möglich, beide Formgebungsstränge im wesentlichen gleich lang auszubilden und durch den sich am unteren Ende erweiternden Ausgabespalt das Profil 10 aus der Vorrichtung zu entfernen.

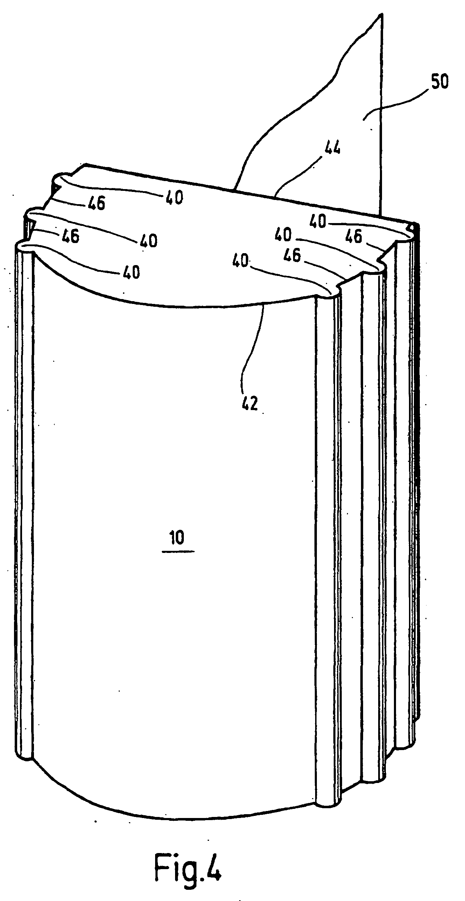

Die beiden Formgebungsstränge 12,14 bestehen im wesentlichen jeweils aus einzelnen Formgebungsteilen 18, die gruppenweise einander zugeordnet über eine vorgebbare Formgebungsstrecke 20 miteinander in Wirkverbindung stehen. In der gezeigten Ausführungsform nach der Fig. 1 ist die Formgebungsstrecke 20 im wesentlichen durch zwölf Gruppen an Formgebungsteilen 18 gebildet, die in Reihen hintereinander angeordnet jeweils entlang ihrer Ränder aneinanderstoßen (vgl. Fig.3). In Abhängigkeit von dem jeweiligen Anwendungsfall, kann die dahingehende Formgebungsstrecke 20 gegenüber der gezeigten Ausführungsform nach der Fig. 1 deutlich verlängert oder verkürzt werden.

Das eigentliche Formmaterial zum Herstellen des Profils 10 kann vorzugsweise aus einem thermoplastischen Kunststoffmaterial bestehen, beispielsweise aus einem Polyamidwerkstoff; es sind aber auch Kunststoffmaterialien denkbar, wie Elasten-Material, Olefine, PVC und dergleichen. Das Formmaterial wird über eine Extrudereinrichtung 22 an eine Zuführeinrichtung 24 weitergegeben, die auf ihrer den beiden Formgebungssträngen 12 und 14 zugewandten Unterseite mit einer Einführdüse 26 versehen ist, um derart kontinuierlich und dosiert das Kunststoffmaterial dem Formgebungsvorgang für das Profil 10 zuzuführen.

Wie die Fig.1 des weiteren ergibt, sind die einzelnen Formgebungsteile 18 eines jeden Formgebungsstranges 12,14 in einer geschlossenen Umlaufbahn geführt, wobei die dahingehende Umlaufführung im Hinblick auf die beiden Abdeckungen 28 nur teilweise ersichtlich ist. Jeder Formgebungsstrang 12,14 ist für sich gesehen oder gemeinsam von einem nicht näher dargestellten Zentralantrieb derart angetrieben, daß die Formgebungsteile 18 lose aneinanderstoßend die aufgebrachte Antriebsleistung an das in Umlaufrichtung jeweils nachgeordnete Formgebungsteil 18 weitergeben. Da die dahingehende Antriebstechnik innerhalb der Corrugator-Technologie zum Herstellen von Drainagerohren od. dgl. bekannt ist und die Herstellvorrichtung nach der Fig. 1 vom Grundkonzept her vergleichbar aufgebaut ist, wird an dieser Stelle hierauf nur noch insoweit eingegangen, als es wesentlich ist zur Erläuterung des erfindungsgemäßen Herstellverfahrens.

Die gewählte Antriebsrichtung ist für den Formgebungsstrang 12 im Uhrzeigersinn verlaufend und für den Formgebungsstrang 14 entgegengesetzt dem genannten Uhrzeigersinn. In Blickrichtung auf die Fig.1 gesehen werden also die beiden, eine Gruppe bildenden Formgebungsteile 18, die der Einführdüse 26 am nächstkommenden sind, durch diese mit dem Formmaterial befüllt und dann von oben nach unten gleichförmig weiterbewegt, wobei fortlaufend über die Formgebungsstränge 12,14 jeweils ein neues Paar an Formgebungsteilen 18 im Bereich der Einführdüse 26, aus der fortlaufend das Kunststoffmaterial nachströmt, geschlossen wird.

An der Unterseite der Vorrichtung entfernen sich dann die beiden, eine Form bildenden Formgebungsteile 18 wieder voneinander und geben das Profil 10 für eine Entnahme frei. Mithin ist die Eindringrichtung des Kunststoffmaterials zwischen die Formgebungsstränge 12,14 derart gewählt, daß diese parallel zu deren Umlaufrichtung verläuft. Bei einer nicht näher dargestellten Ausführungsform wäre es aber durchaus auch möglich, die Einführdüse 26 quer zu der Antriebsrichtung verlaufend anzuordnen und von der Seite her das Kunststoffmaterial in die Formgebungsteile 18 einzuspritzen. Ferner kann die Vorrichtung nach der Fig. 1 entgegen der dort gezeigten Vertikalanordnung auch horizontal ausgerichtet sein, so daß dann die Formgebungsstrecke senkrecht auf der Zeichenebene stehen würde.

Die Vorrichtung nach der Fig. 1 kann ferner in üblicher und daher nicht näher beschriebener Art und Weise eine Druckmedium erzeugende und/oder eine Vakuum erzeugende Einrichtung aufweisen und zusätzlich oder alternativ für die Formgebungsteile 18 mit einer Beheizungs- und/oder Kühleinrichtung (nicht näher dargestellt) versehen sein. Sofern die Förmgebungsteile 18 mit ihren Kavitäten an eine Vakuum erzeugende Einrichtung anschließbar sind, kann durch Erzeugen eines Unterdruckes in den Formgebungsteilen 18 das Einformen des Kunststoffmaterials in die Kavitäten erleichtert werden. Sofern eine Druckmedium erzeugende Einrichtung, insbesondere eine Druckluft erzeugende Einrichtung zum Einsatz kommt, läßt sich der Entformvorgang unter Einwirkung des Druckmediums am Ende der Formgebung erleichtern. Sofern eine Beheizungseinrichtung zum Einsatz kommt, läßt sich das Kunststoffmaterial länger in plastischem Zustand erhalten, was gleichfalls das Einströmen des Kunststoffmaterials in die zuordenbaren Kavitäten erleichtert. Eine Kühleinrichtung führt zum rascheren Erhärten des plastifizierten Kunststoffmaterials in den Formgebungsteilen 18 und mithin zu einer Verkürzung der Formgebungsstrecke 20, die ansonsten ohne Kühleinrichtung für eine längere Abkühlzeit von der Baulänge her größer dimensioniert sein muß.

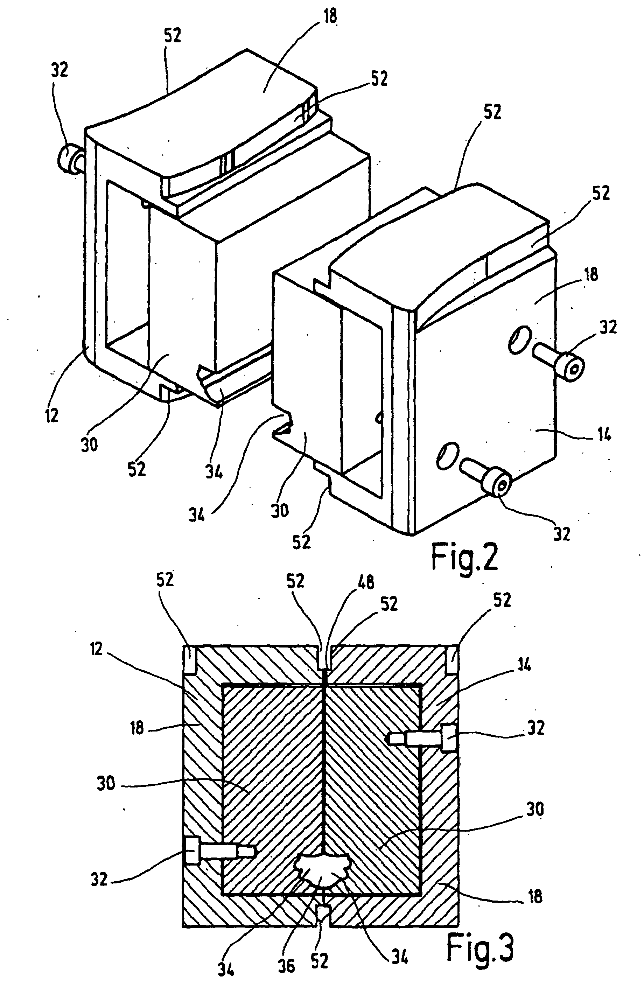

In der Fig.2 sind zwei einander zugeordnete Formgebungsteile 18 als Formgebungsbacken 30 ausgebildet. Die Formgebungsbacken 30 sind in der Art von Formquadern ausgebildet und von den bügelartigen Formgebungsteilen 18 an ihren Längsrändern umfaßt. Zum Festlegen der Formgebungsbacken 30 in den Formgebungsteilen 18 dienen übliche Schrauben 32. Im festgeschraubten Zustand nehmen die Formgebungsbacken 30 innerhalb der Formgebungsteile 18 dann eine Einbaulage ein, wie sie in der Fig.3 im Schnitt dargestellt ist, bei der die beiden Formgebungsteile 18 nach der Fig.1 mit ihren einander zugewandten Stirnseiten aneinanderliegen.

In Blickrichtung auf die Fig. 2 und 3 ist auf der unteren Hälfte der Formgebungsbacken 30 beidseitig je eine Profilausnehmung 34 vorhanden, wobei beide Profilausnehmungen 34 zusammen im Querschnitt einen Hohlkanal 36 (vgl. Fig.3) ausbilden, dessen Querschnitt dem Querschnitt der in der Fig.4 gezeigten Profilleiste 10 entspricht. Jede Profilausnehmung 34 in der Art eines Halbprofils ist umfangsseitig mit drei rippenartigen Längskanälen 38 versehen, die später die leistenartigen Verhakungselemente 40 am Außenumfang 42 des Profils 10 ausbilden.

Wie die Fig.4 des weiteren zeigt, sind die genannten Verhakungselemente 40 einstückiger Teil der Leiste 12 und können als profilartige Fortsätze in rinnenartige Ausnehmungen eines nicht näher dargestellten Polsterteils entlang ihrer gesamten Längsausrichtung eingreifen, um derart ein Befestigungssystem zu bilden zwischen Polsterteilen eines nicht näher dargestellten Fahrzeugsitzes und einem Polsterbezugmaterial od, dgl.. Der Außenumfang 42 ist in Blickrichtung auf die Fig.4 gesehen dem Betrachter zugewandt konvex ausgebildet und mithin mit einer Rundung versehen, wohingegen die rückseitige Wand 44 des Außenumfanges 42 als Ebene ausgebildet ist. Zwischen den rippenartigen Verhakungselementen 40 befinden sich Zwischenabschnitte 46 des Außenumfanges 42, die gleichfalls konvex bzw. gewölbt ausgebildet sind.

Wie des weiteren die Fig.3 zeigt, begrenzen die beiden einander zugewandten Formgebungsbacken 30 zweier Formgebungsteile 18 einen Einlaufspalt 48 miteinander, über den ein zugeführtes Ansatzteil 50 (vgl. Fig.4) mit dem Profil 10 verbunden wird. Zum Zuführen des Ansatzteiles 50 in der Art einer gewebeartigen Annähfahne dient eine nicht näher dargestellte Eingabeeinrichtung, die gemäß der Darstellung nach der Fig.1 im oberen Bereich der Formgebungsstrecke 20 eine fortlaufende Zufuhr des Gewebematerials sicherstellt. Da der Einlaufspalt 48 mittig in den Hohlkanal 36 eingreift, ist bei dem später: hergestellten Profil 10 etwa in der Mitte der Wand 44 das Ansatzteil 50 angesetzt. Am freien Ende des Ansatzteils 50 bzw. der Annähfahne läßt sich dann ein Polsterbezugstoff beispielsweise über eine Klebstoffverbindung oder eine Naht entsprechend festlegen. Dahingehende Abspannsysteme sind beispielhaft in der DE 199 52 416 C1 offenbart, so daß an dieser Stelle hierauf nicht mehr näher eingegangen wird. Jedenfalls verläßt das Profil 10 mit Ansatzteil 50 am unteren Ende und Ausgabespalt der Vorrichtung nach der Fig. 1 dieselbe und steht für den späteren Einsatz als Befestigungssystem unmittelbar zur Verfügung.

An den Formgebungsteilen 18 angeformte Führungsflächen 52 dienen als Führungseinrichtung, damit die einzelnen Formgebungsteile 18 entlang der umlaufenden Bahnen der Formvorrichtung definiert geführt werden können. Neben der gezeigten Umlaufanordnung besteht darüber hinaus bei einer nicht näher dargestellten Ausführungsform der Vorrichtung die Möglichkeit, die jeweils eine Gruppe bildenden Formgebungsteile 18 über eine Zwangsführung der Fördereinrichtung unmittelbar axial aufeinander zu oder voneinander weg zu bewegen. Über die dahingehende Zwangsführung lassen sich dann höhere Bewegungskräfte auf die Formgebungsteile 18 ausüben und das Entformen des jeweiligen Profils 10 kann im wesentlichen senkrecht zu der Bewegungsebene der Formgebungsbacken 30 erfolgen. Bei der gezeigten Ausführungsform nach der Fig. 1 werden dort die Formgebungsbacken 30 voneinander aufspreizend in Umlaufrichtung weggeführt und derart ein kontinuierlich zunehmender Entnahmespalt gebildet, was zu geringen Entnahmekräften führt und einen schonenden Entformungsvorgang sicherstellt, so daß die Vorrichtung auch mit hohen Band- und Umlaufgeschwindigkeiten betrieben werden kann und ein überraschend schneller Herstellprozeß für das Profil 10 erreicht ist.

Anstelle der gezeigten Formgebungsbacken 30 nach den Fig.2 und 3 können auch in der Art von wechselnden Formgebungseinsätzen andere, nicht näher dargestellte Formgebungsbacken in die Formgebungsteile 18 eingesetzt werden, die mit anderen Profilquerschnitten versehen sind. Mithin läßt sich dann mit der in der Fig.1 gezeigten Vorrichtung eine Vielzahl an verschiedensten Profilen erstellen. Gegebenenfalls ist es auch möglich, über die Formgebungsstrecke 20 hinweg Formgebungsbacken 30 mit unterschiedlichen Profilquerschnitten einzusetzen, um derart ein Mischprofil zu erhalten, wobei dann ein Profilstrang mit unterschiedlichen Querschnittsformen ausgestattet ist, beispielsweise indem sich Strecken des Profils 10 mit Verhakungselementen 40 mit solchen ablösen, die ohne Verhakungselemente (nicht dargestellt) ausgestattet sind.

Ferner kann man das jeweils eingesetzte Kunststoffmaterial mit einem Treibmittel, beispielsweise in Form von CO₂-haltigem Granulat, das unter dem Temperatur- und Formgebungseinfluß dann ein Treibgas in Form von CO₂ innerhalb des Kunststoffmaterials freisetzt, versehen. Das derart dann geschäumte Kunststoffmaterial läßt sich schadensfrei aus der Vorrichtung entformen, und darüber hinaus erhält man sehr leicht aufbauende und dennoch feste Profile 10. Mit dem erfindungsgemäßen Herstellverfahren lassen sich sehr hohe Herstellgeschwindigkeiten für Profile 10 erreichen, wie sie mit den konventionellen Extrudereinrichtungen keinesfalls zu erreichen sind. Die benachbart zueinander angeordneten Formgebungsteile 18 sind zwar lose, aber dennoch in abdichtender Weise aneinandergehalten, so daß sichergestellt ist, daß das zur Formgebung anstehende Kunststoffmaterial die Formvorrichtung nicht ungewollt verlassen kann.

## Patentansprüche

1. Verfahren zum fortlaufenden Herstellen von Vollkammerprofilen (10) mit mindestens zwei Formgebungssträngen (12,14), die jeweils aus einzelnen Formgebungsteilen (18) bestehen, die gruppenweise einander zugeordnet und über eine vorgebbare Formgebungsstrecke (20) sowie mit einem Formmaterial versehen derart aneinandergehalten werden, daß nach Trennen der Gruppen an Formgebungsteilen (18) das Profil (10) erhalten wird, wobei zwei einander zugeordnete Formgebungsstränge (12,14) vorgesehen und die einzelnen Formgebungsteile (18) aus Formgebungsbacken (30) derart gebildet werden, daß jede Formgebungsbacke (30) zumindest teilweise eine Profilausnehmung (34) aufweist, und wobei mit allen Profilausnehmungen (34) gemeinsam das Vollkammerprofil (10) gebildet wird, **dadurch gekennzeichnet, daß** zwischen den Formgebungsbacken (30) der Formgebungsteile(18), die unter Bildung der Formgebungsstrecke (20) aneinandergehalten werden, ein Einlaufspalt (48) begrenzt wird, über den ein zugeführtes Ansatzteil (50) mit dem Profil (10) verbunden wird.

2. Verfahren nach Anspruch 1, **dadurch gekennzeichnet, daß** jede Profilausnehmung (34) umfangsseitig mit mindestens einem rippenartigen Längskanal (38) versehen wird, der mit der Profilausnehmung (34) einen Hohlkanal (36) bildet.

3. Verfahren nach einem der Ansprüche 1 und 2, **dadurch gekennzeichnet, daß** das Formmaterial vorzugsweise aus einem thermoplastischen Kunststoffmaterial gebildet wird und über eine Extruder(22)- und Zuführeinrichtung (24) am Anfang der Formgebungsstrecke (20) zwischen die benachbarten Formgebungsstränge (12,14) mit ihren Formgebungsteilen (18) eingebracht wird.

4. Verfahren nach Anspruch 3, **dadurch gekennzeichnet, daß** die Formgebungsteile (18) eines jeden Formgebungsstranges (12,14) in einer geschlossenen Umlaufbahn geführt und von einem Zentralantrieb derart angetrieben werden, daß die Formgebungsteile (18) lose aneinander anstoßend die aufgebrachte Antriebsleistung an das in Umlaufrichtung jeweils nachgeordnete Formgebungsteil (18) weitergeben.

5. Verfahren nach Anspruch 4, **dadurch gekennzeichnet, daß** die Eindringrichtung des Kunststoffmaterials zwischen die Formgebungsstränge (12,14) parallel zu deren Umlaufrichtung oder quer dazu verlaufend gewählt wird.

6. Verfahren nach einem der Ansprüche 1 bis 5, **dadurch gekennzeichnet, daß** die Formgebungsteile (18) mit ihren Kavitäten zum Erzeugen der Profile (10) an eine Druckmedium erzeugende und/oder an eine Vakuum erzeugende Einrichtung angeschlossen werden und daß zusätzlich oder alternativ für die Formgebungsteile (18) eine Beheizungs- und/oder Kühleinrichtung vorgesehen wird.

7. Verfahren nach einem der Ansprüche 1 bis 6, **dadurch gekennzeichnet, daß** die Formgebungsteile (18) modular aufgebaut werden und daß durch den Wechsel von Formgebungseinsätzen die Art der Profile (10) erzeugenden Kavitäten verändert wird.

## Claims

1. A method for the continuous manufacture of solid chamber profiled sections (10) with at least two shaping lines (12, 14) each consisting of individual shaping parts (18) which, associated with one another in groups and while being provided with a moulding material, are held against one another over a predeterminable shaping section (20) in such a manner that, after separation of the groups of shaping parts (18), the profiled section (10) is obtained, wherein two associated shaping lines (12, 14) are provided and the individual shaping parts (18) are formed by shaping jaws (30) in such a manner that each shaping jaw (30) has at least to some extent a profiled recess (34), and wherein the solid chamber profiled section (10) is formed by all the profiled recesses (34) collectively, **characterised In that** an inlet gap (48), through which a fed appendage (60) is joined to the profiled section (10), is defined between the shaping jaws (30) of the shaping parts (18) that are held against one another to form the shaping section (20).

2. A method according to claim 1, **characterised in that** each profiled recess (34) is provided at its periphery with at least one rib-like longitudinal channel (38) which forms with the profiled recess (34) a hollow channel (36).

3. A method according to either claim 1 or claim 2, **characterised in that** the moulding material is preferably composed of a thermoplastic material and is introduced between the adjacent shaping lines (12, 14) with their shaping parts (18) at the start of the shaping section (20) *via* an extruder (22) and feed device (24).

4. A method according to claim 3, **characterised in that** the shaping parts (18) of each shaping line (12, 14) are guided in a closed circulating path and are driven by a central drive in such a manner that the shaping parts (18), loosely abutting one another, transmit the applied driving power to the shaping part (18) that is respectively downstream in the direction of circulation.

5. A method according to claim 4, **characterised in that** the direction selected for penetration of the plastics material between the shaping lines (12, 14) is parallel to the circulating direction thereof or transverse to that direction.

6. A method according to any one of claims 1 to 5, **characterised In that** the shaping parts (18) with their cavities for producing the profiled sections (10) are connected to a device producing pressure medium and/or to a device producing a vacuum and, in addition or altematively, a heating and/or cooling device is provided for the shaping parts (18).

7. A method according to any one of claims 1 to 6, **characterised in that** the shaping parts (18) are of modular construction and the type of the cavities which produce profiled sections (10) can be varied by changing shaping inserts.

## Revendications

1. Procédé pour la fabrication continue de profils à chambres pleines (10) avec au moins deux barres de façonnage (12, 14) qui sont respectivement composées de différentes pièces de façonnage (18) qui sont affectées l'une à l'autre par groupes et, via un trajet de façonnage pouvant être prédéfini (20) ainsi que dotées d'un matériau de façonnage, sont maintenues l'une contre l'autre de telle manière qu'après la séparation des groupes le profil (10) sur les pièces de façonnage (18) soit conservé, deux barres de façonnage (12, 14) affectées l'une à l'autre étant prévues et les différentes pièces de façonnage (18) étant formées à partir de mâchoires de façonnage (30) de manière à ce que chaque mâchoire de façonnage (30) comporte au moins en partie un évidement profilé (34) et le profil à chambres pleines (10) étant formé de tous les évidements profilés, **caractérisé en ce qu'**entre les mâchoires de façonnage (30) des pièces de façonnage (18) qui sont maintenues l'une contre l'autre en formant le trajet de façonnage (20), une fente d'entrée (48) par le biais de laquelle une pièce ajoutée amenée (50) est reliée au profil (10) est limitée.

2. Procédé selon la revendication 1, **caractérisé en ce que** chaque évidement profilé (34) est doté du côté de la circonférence d'au moins un canal longitudinal à nervures (38) qui forme un canal creux (36) avec l'évidement profilé (34).

3. Procédé selon une des revendications 1 et 2, **caractérisé en ce que** le matériau de façonnage est de préférence formé d'un matériau thermoplastique et introduit via un dispositif d'extrudeuse (22) et d'alimentation (24) au début du trajet de façonnage (20) entre les barres de façonnage voisines (12, 14) avec leurs pièces de façonnage (18).

4. Procédé selon la revendication 3, **caractérisé en ce que** les pièces de façonnage (18) de chaque barre de façonnage (12, 14) sont guidées dans un circuit fermé et entraînées par un dispositif d'entraînement central de telle manière que les pièces de façonnage (18) librement adjacentes transmettent la puissance d'entraînement générée à la pièce de façonnage (18) respectivement située en aval dans le sens de circulation.

5. Procédé selon la revendication 4, **caractérisé en ce que** la direction de pénétration du matériau en plastique entre les barres de façonnage (12, 14) est choisie parallèle à leur sens de circulation ou perpendiculaire à ce dernier.

6. Procédé selon une des revendications 1 à 5, **caractérisé en ce que** les cavités de production des profils (10) des pièces de façonnage (18) sont raccordées à un dispositif générant un fluide sous pression et/ou une dépression et **en ce que**, de plus ou comme alternative, un dispositif de chauffage et/ou de refroidissement est prévu pour les pièces de façonnage (18).

7. Procédé selon une des revendications 1 à 6, **caractérisé en ce que** les pièces de façonnage (18) ont une structure modulaire et **en ce que** le changement d'inserts de façonnage modifie le type des cavités qui génèrent des profils (10)
